Europäisches Patentamt

European Patent Office

Office européen des brevets

(11) Publication number: **0 274 548 B1**

# EUROPEAN PATENT SPECIFICATION

(45) Date of publication of patent specification: **23.10.91**    (51) Int. Cl.5: **F16L 25/00**, G01F 15/18

(21) Application number: **87100163.2**

(22) Date of filing: **08.01.87**

(54) Coupling device for instruments in pipelines.

<table>
<tr><td>

(43) Date of publication of application:<br>
**20.07.88 Bulletin 88/29**

(45) Publication of the grant of the patent:<br>
**23.10.91 Bulletin 91/43**

(84) Designated Contracting States:<br>
**DE FR GB**

(56) References cited:<br>
**DE-A- 1 816 842**<br>
**DE-A- 2 517 198**<br>
**DE-B- 1 231 074**

</td><td>

(73) Proprietor: **ANDRAE LEONBERG GMBH**<br>
**Neue Ramtelstrasse 48**<br>
**W-7250 Leonberg(DE)**

(72) Inventor: **The inventor has agreed to waive**<br>
**his entitlement to designation**

(74) Representative: **Hoeger, Stellrecht & Partner**<br>
**Uhlandstrasse 14 c**<br>
**W-7000 Stuttgart 1(DE)**

</td></tr>
</table>

## Description

The present invention relates to devices for coupling various instruments to pipes in general and, in particular, to couplings for plastic instruments in pipelines.

Transportation of liquids and other fluids through pipes has long been known. It is often necessary to insert a flow meter, valve or other instrument at various places along the pipeline. The couplings at these joints must be strong enough to withstand the forces exerted on the pipes and must include sealing means to prevent leakage of the fluids from the pipe. Furthermore, due to the lengths and weights of the pipes involved, it is desirable to provide couplings which permit simple insertion and removal of the instruments in the fluid flow path, without moving the pipes.

Until recently, most of the pipes used for fluid flow, and particularly for water flow, were rigid metal pipes. The conventional manner of joining a metal instrument to metal pipes is by use of a union coupling including three elements: the thread end (i.e., the outlet of the instrument to be joined which is threaded with external threads), the bottom end (a nipple member adapted to be affixed to the end of the pipe to be joined,) and a nut having an inside flange at one end and an inside thread like that on the exterior of the thread end at the other end. Generally a gasket or flat seal is placed between the thread and bottom ends, which are drawn together by the nut. This manner of joining a metal instrument to pipes is known from e. g. DE-A-1 816 842 if the pipe section (a) of this known coupling device is interpreted as a nipple within the meaning of the above description of the prior art.

The advantage of these couplings is that instruments can be inserted into the pipeline without the need to translate or rotate the existing pipeline during attachment. Nonetheless, tension is often created on the instrument inserted into the pipeline due to imprecision of the fit between adjacent elements. That is, if the sections of pipe are a little too far apart or a little too close together for the ideal fit of the instrument therebetween, pressure and tension are created on the instrument.

In addition, torque stress is often generated through the tightening of the union on the elements. And finally, differences in ambient temperature cause piping to expand and contract, and the instrument suffers from the change in tension. As a particular example, when water meters are inserted into a pipeline, the pressure on the body of the water meter due to the method of coupling can be much greater than that which the meter must withstand during operation.

With conventional metal water meters and other metal instruments, these problems are essentially negligible, since the metal is stong enough to withstand these additional forces. However, with the advent of plastic instruments, the problem of couplings is more serious. The additional tension on these instruments frequently causes the instruments to break or malfunction.

It is therefore an object of the present invention to provide a simple coupling for plastic instruments or other devices, such as flow meters, hydraulic valves and the like, in a pipeline which overcomes the above-mentioned disadvantages of the prior art.

For achieving this object an instrument of the known type, i. e. an instrument having a first and a second pipe connector and a first coupling device for connecting the first pipe connector to a first nipple to be connected to a pipe, said coupling device comprising a nut element rotatably mounted on said nipple and being provided with an internal thread facing the instrument as well as an internal shoulder facing said internal thread, said coupling device further comprising on the first nipple an external shoulder facing the internal shoulder of said nut element for cooperation therewith, and with a sealing ring for sealing the connection between the first pipe connector and the first nipple, is characterised in accordance with subject invention in that for minimizing tensional forces exerted by said pipe on a plastic instrument the first coupling device comprises in addition a ring element rotatably mounted on the first pipe connector and having an external thread for cooperation with the internal thread of the nut element, as well as an external shoulder on the first pipe connector which faces one end of the ring element remote from the instrument, and in that a first O-ring is sealingly mounted between said nut element, said ring element and said pipe connector, and in that a second O-ring is sealingly mounted between said nut element and said nipple.

In accordance with the present invention a torque transmittal from the pipe line to the instrument casing is prevented by avoiding a direct thread connection between the nut element and the pipe connector on the one hand and the nipple on the other hand, namely by using connecting elements, i. e. the nut element and the ring element, which are freely rotatably mounted on the pipe connector of the instrument casing and on the nipple, and these two elements, namely the nut element and the ring element, provide a coupling nut device which can be tightened in axial direction but through which no torque can be transmitted from the nipple to the instrument casing. In addition, transmittal of axial forces from the pipeline to the instrument casing are avoided by using two O-rings which may be radially clamped between the nut element and the pipe connector on the one hand and the nipple on the other hand. By these features it is possible to have an axial gap between the pipe connector and the nipple so that no axial forces can be transmitted from the pipeline to the instrument casing.

In a preferred embodiment of the inventive instrument a second coupling device is provided for connecting the second pipe connector to a second nipple to be connected to a pipe which second coupling device, for preventing a torque transmittal from the pipeline to the instrument casing without the need of two O-rings, comprises a second ring element rotatably mounted on the second pipe connector and having an external thread, a second nut element rotatably mounted on the second nipple and having an internal thread facing the instrument for cooperation with the external thread of the second ring element as well as an internal shoulder facing its internal thread, said second pipe connector and said second nipple being provided with external shoulders facing one end of the second ring element remote from the instrument and the internal shoulder of the second nut element, respectively. It is not necessary to use a gasket in this second coupling device if the faces of the nipple and of the pipe connector facing and abutting each other are suitably machined for achieving a tight sealing.

The ring element can be a one piece ring element if the pipe connector is in the form of a separate piece which is e. g. threaded into a threaded bore of the instrument casing so that the ring element can be mounted on the pipe connector prior to mounting the same at the instrument casing.

However, in a preferred embodiment of the inventive coupling device the ring element is provided by two annular shell halves. Such an improved ring element can be used also in embodiments in which the pipe connector is an integral portion of the instrument casing.

Features of further preferred embodiments can be taken from the enclosed claims.

A preferred embodiment of the inventive device is described in the following and shown in the enclosed drawings in which:

Fig. 1 is a sectional view of a coupling device constructed and operative in accordance with the present invention coupling a water meter to a pipeline; and

Fig. 2 is a plan view of the device of Fig. 1.

## DETAILED DESCRIPTION OF THE INVENTION

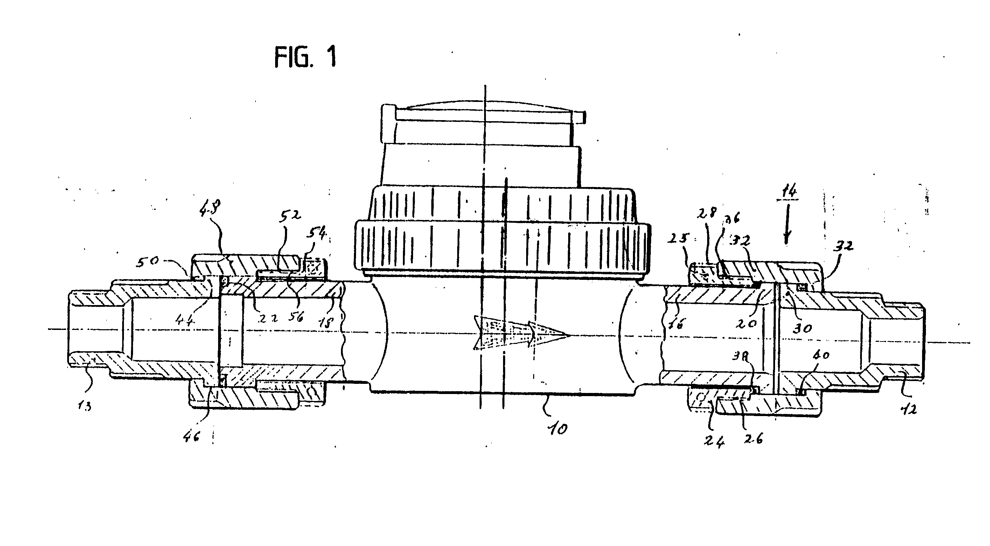

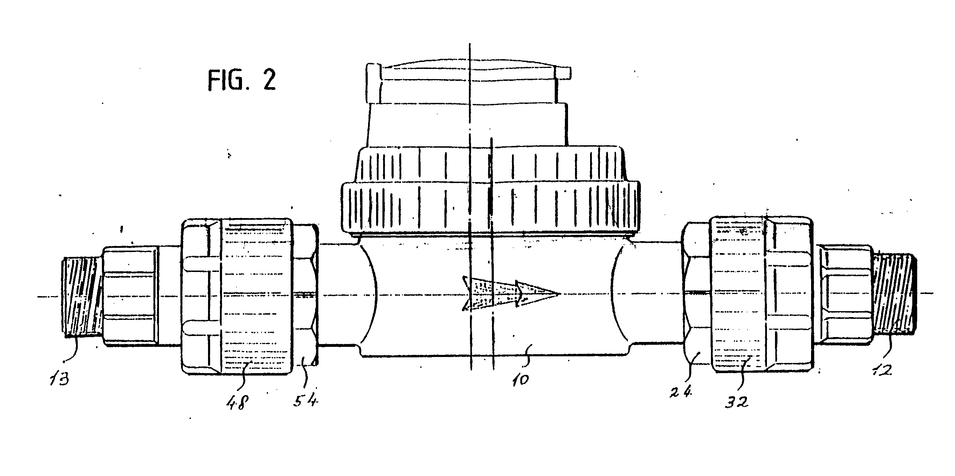

Referring now to Figs. 1 and 2 there is shown in respective sectional and plan views a plastic instrument 10 coupled between nipple members 12, 13 (which, in turn, are adapted to be coupled in a pipeline) by means of a coupling device generally designated 14 constructed and operative in accordance with an embodiment of the present invention. Instrument 10 defines bottom ends 16 and 18 extending on either side thereof which serve as the outlet and inlet of the instrument. Each of bottom ends 16 and 18 defines an outwardly protruding flange 20, 22.

Rotatably mounted about bottom end 16 is a ring element 24 comprising two annular shell halves bolted to one another as by snap-fits 25. Ring element 24 defines screw threads 26 along the outer surface of its body and defines a protruding flange 28. Flange 28 preferably defines a hexagonal periphery permitting gripping thereof by known wrenches and the like. This can be seen most clearly in Fig. 2.

The nipple 12 to which instrument 10 is to be coupled defines an exterior shoulder 30. Rotatably mounted about nipple 12, flange 20 of bottom end 16 and ring element 24 is a nut member 32. Nut member 32 defines an interior shoulder 34 at one end thereof and screw threads 36 on the interior of its body at the other end thereof. Screw threads 36 on the interior of nut member 32 are complementary to threads 26 on the exterior of ring member 24.

Two O-rings 30 and 40 are utilised for sealing the coupling. O-ring 38 is disposed between the body of nut member 32 and the body of bottom end 16, between flange 20 and ring element 24, to prevent leakage through the bottom end. And O-ring 40 is disposed between the body of nut member 32 and the body of nipple 12, adjacent interior shoulder 34 and exterior shoulder 30, to prevent leakage through the nipple.

Operation of the coupling of the present invention is as follows. The instrument 10 is inserted in the appropriate location in the pipeline and is coupled at bottom end 18 to nipple 13 by any conventional union, or by means which will be further described hereinbelow. Bottom end 16 is then aligned adjacent nipple 12 and nut member 32 is screwed into tight engagement with ring element 24. As can be seen, there is no contact between flange 20 of bottom end 16 and shoulder 30 of nipple 12, as is required in conventional couplings. Rather, a gap remains between the two, preferably about 1 to 2 mm, although any other distance may be provided, depending upon the size of the O-rings and the length of the nut member.

It is a particular feature of the present invention that threads are not provided as an integral part of the exterior of the instrument body, i.e., on the inlet or outlet, but rather on a separate, replaceable element, ring element 24. Thus, the instrument is firmly tightened into the pipeline at bottom end 18 by means of a union which insures the proper orientation of the instrument while leaving bottom end 16 free. The nut element of coupling 14 is tightened about ring element 24, which is freely rotatable relative to the instrument although restrained thereon by the flange on the bottom end. This ring element, thus, eliminates any torque stress on the instrument at the time of assembly in the pipeline.

It is a further particular feature of the present invention that upon rotation of nut member 32, O-rings 38 and 40 provide sealing between the bodies of the nut member and the nipple 12 and the bottom end 16. Thus, increased tension or other axial stress caused by expansion or contraction of the pipes or due to imprecision in the gap in the pipeline wherein the instrument 10 is inserted is initially absorbed by the O-rings and not transmitted to the instrument. Only after the O-rings have been completely compressed and the gap between the nipple and the bottom end has closed are the axial forces transmitted to the instrument, and then they are transmitted to the flange of the instrument only.

According to a preferred embodiment of the invention, the second bottom end 18 of instrument 10 is coupled to nipple 13 by a modified union coupling. Nipple 13 defines an exterior shoulder 44. A conventional gasket 46 or other flat seal is provided between flange 22 of bottom end 18 and shoulder 44 of nipple 13, and the bottom end and nipple are tightened into sealing engagement with one another by means of a conventional union nut 48. Union nut 48 defines an interior shoulder 50 at one end thereof complementary to exterior shoulder 44 of nipple 13, and at the other end defines a threaded portion 52.

The improvement in this embodiment comprises providing an outward flange on the end of bottom end 18, and no threads thereon. A ring element 54, identical to ring element 24 described with reference to Fig. 1 and defining screw threads 56 on part of its outer surface, is mounted about bottom end and is arranged so as not to rotate relative thereto. Any conventional means such as a protruding ridge (not shown) may be provided on bottom end 18 to engage a complementary groove or other means on ring element 54 and prevent rotation thereof. The threaded portion 52 of nut member 48 is complementary to threaded portion 56 of ring element 54 and is arranged for engagement therewith upon rotation of the nut member.

It is a particular feature of this embodiment of the invention that a strong, tight joint is provided while torque stress during tightening of the coupling and bringing the nipple 13 into engagement with bottom end 18 is largely absorbed by the ring element and not transferred to instrument 10. It is a further particular feature that the parts which are manufactured for the coupling device 14 of the present invention can also be utilized in the modified union coupling of bottom end 18 of the instrument.

The coupling device of the present invention can be formed of any suitable material, including metal. Preferably, the nut elment and shell halves of the ring element are formed of a plastics material.

## Claims

1. An instrument (10) having a first and a second pipe connector (16, 18) and a first coupling device (14) for connecting the first pipe connector (16) to a first nipple (12) to be connected to a pipe, said coupling device (14) comprising a nut element (32) rotatably mounted on said nipple (12) and being provided with an internal thread (36) facing the instrument (10) as well as with an internal shoulder (34) facing said internal thread, said coupling device (14) further comprises on the first nipple (12) an external shoulder (30) facing the internal shoulder (34) of said nut element (32) for cooperation therewith, and a sealing ring for sealing the connection between the first pipe connector (16) and the first nipple (12), characterized in that for minimizing tensional forces exerted by said pipe on a plastic instrument (10) the first coupling device (14) comprises in addition a ring element (24) rotatably mounted on the first pipe connector (16) and having an external thread (36) for cooperation with the internal thread (36) of the nut element (32), as well as an external shoulder (20) on the first pipe connector (16) which faces one end of the ring element (24) remote from the instrument (10), and that a first O-ring (38) is sealingly mounted between said nut element (32), said ring element (24) and said pipe connector (16), and that a second O-ring (40) is sealingly mounted between said nut element (32) and said nipple (12).

2. An instrument as claimed in claim 1, wherein said O-rings (38, 40) are arranged adjacent said external shoulders (20, 30).

3. An instrument as claimed in claim 1 or 2, wherein the nut element (32) extends over a gap between the ends of the pipe connector (16) and of the nipple (12) facing each other.

4. An instrument as claimed in one or several of claims 1 to 3, wherein a second coupling device is provided for connecting the second pipe connector (18) to a second nipple (13) to be connected to a pipe, which second coupling

device ccmprises:

a second ring element (54) rotatably mounted on the second pipe connector (18) and having an external thread (56);

a second nut element (48) rotatably mounted on the second nipple (13) and having an internal thread (52) facing the instrument (10) for cooperation with the external thread (56) of the second ring element (54) as well as an internal shoulder facing its internal thread (52);

said second pipe connector (18) and said second nipple (13) being provided with external shoulders facing one end of the second ring element (54) remote from the instrument (10) and the internal shoulder of the second nut element (48), respectively.

5. An instrument as claimed in claim 4, wherein a gasket (46) is provided between the ends of the second pipe connector (18) and of the second nipple (13) facing each other.

6. An instrument as claimed in one of the preceding claims, wherein said ring element (24; 54) is provided by two annular shell halves.

7. An instrument as claimed in claim 6, wherein said shell halves are releasably connected to each other.

8. An instrument as claimed in one or several of the preceding claims, wherein said instrument is a water meter.

**Revendications**

1. Appareil (10) comprenant un premier et un second tuyaux de branchement (16, 18) et un premier dispositif de raccordement (14) destiné à relier le premier tuyau de branchement (16) à un premier raccord (12) devant être relié à un conduit, ledit dispositif de raccordement (14) comprenant un écrou (32) monté rotatif sur ledit raccord (12) et comportant un taraudage (36) situé du côté de l'appareil (10) ainsi qu'une bride intérieure (34) faisant face audit taraudage, ledit dispositif de raccordement (14) comprenant par ailleurs, sur le premier raccord (12), une bride extérieure (30) faisant face à la bride intérieure (34) dudit écrou (32) afin de coopérer avec elle, et un joint pour étanchéifier la liaison entre le premier tuyau de branchement (16) et le premier raccord (12), caractérisé en ce que, pour minimiser les forces de traction exercées par ledit conduit sur un appareil de matière plastique (10), le premier dispositif de raccordement (14) comprend en plus un élément annulaire (24) monté rotatif sur le premier tuyau de branchement (16) et comportant un filetage (36) destiné à coopérer avec le taraudage (36) de l'écrou (32), ainsi qu'une bride extérieure (20) réalisée sur le premier tuyau de branchement (16) et faisant face à une extrémité de l'élément annulaire (24) qui est tournée à l'opposé de l'appareil (10) et en ce qu'un premier joint torique (38) est monté de manière à assurer l'étanchéïté entre ledit écrou (32), ledit élément annulaire (24) et ledit tuyau de branchement (16) et en ce qu'un second joint torique (40) est monté de manière à assurer l'étanchéïté entre ledit écrou (32) et ledit raccord (12).

2. Appareil selon la revendication 1, dans lequel lesdits joints toriques (38,40) sont disposés à côté desdites brides extérieures (20,30)

3. Appareil selon la revendication 1 ou 2, dans lequel l'écrou (32) passe sur un interstice situé entre les extrémités du tuyau de branchement (16) et du raccord (12) qui sont en face l'une de l'autre.

4. Appareil selon l'une ou plusieurs des revendications 1 à 3, dans lequel un second dispositif de raccordement est destiné à assembler le second tuyau de branchement (18) à un second raccord (13) devant être relié à un conduit, ledit second dispositif de raccordement comprenant :
   un second élément annulaire (54) monté rotatif sur le second tuyau de branchement (18) et comportant un filetage (56);
   un second écrou (48) monté rotatif sur le second raccord (13) et comportant un taraudage (52) situé du côté de l'appareil (10) et destiné à coopérer avec le filetage (56) du second élément annulaire (54) ainsi qu'une bride intérieure faisant face à son taraudage (52);
   ledit second tuyau de branchement (18) et ledit second raccord (13) comportant des brides extérieures qui sont en face d'une extrémité du second élément annulaire (54) tournée à l'opposé de l'appareil (10) et de la bride intérieure du second écrou (48), respectivement.

5. Appareil selon la revendication 4, dans lequel un joint d'étanchéïté (46) est placé entre les extrémités du second tuyau de branchement (18) et du second raccord (13) qui sont situées en face l'une de l'autre.

6. Appareil selon l'une des revendications précédentes, caractérisé en ce que ledit élément annulaire (24, 54) est constitué de deux demi-coquilles annulaires.

7. Appareil selon la revendication 6, caractérisé en ce que lesdites demi-coquilles sont reliées de manière amovible l'une à l'autre.

8. Appareil selon l'une ou plusieurs des revendications précédentes, dans lequel ledit appareil est un débitmètre à eau.

**Patentansprüche**

1. Instrument (10) mit einem ersten und einem zweiten Rohranschluß (16, 18) und einer ersten Kupplungsvorrichtung (14) zum Verbinden des ersten Rohranschlusses (16) mit einem an eine Rohrleitung anschließbaren ersten Nippel (12), wobei die erste Kupplungsvorrichtung (14) eine auf dem Nippel (12) drehbar angebrachte Mutter (32), welche ein dem Instrument (10) zugewandtes Innengewinde (36) und eine letzterem zugewandte Innenschulter (34) aufweist, sowie am Nippel (12) eine der Innenschulter (34) der Mutter (32) zugewandte und mit dieser Innenschulter zusammenwirkende Außenschulter (30) besitzt, und mit einem Dichtring zum Abdichten der Verbindung zwischen dem ersten Rohranschluß (16) und dem ersten Nippel (12), dadurch gekennzeichnet, daß zur Erzielung minimaler, von der Rohrleitung auf ein Kunststoffinstrument (10) ausgeübter Zugkräfte die erste Kupplungsvorrichtung (14) außerdem ein Ringelement (24) besitzt, welches drehbar auf dem ersten Rohranschluß (16) angeordnet ist und ein mit dem Innengewinde (36) der Mutter (32) zusammenwirkendes Außengewinde (36) aufweist, daß der erste Rohranschluß (16) eine Außenschulter (20) aufweist, die dem vom Instrument (10) abgekehrten Ende des Ringelements (24) zugekehrt ist, und daß ein erster O-Ring (38) abdichtend zwischen der Mutter (32), dem Ringelement (24) und dem Rohranschluß (16) sowie ein zweiter O-Ring (40) abdichtend zwischen der Mutter (32) und dem Nippel (12) angeordnet ist.

2. Instrument nach Anspruch 1, wobei die O-Ringe (38,40) den Außenschultern (20,30) benachbart angeordnet sind.

3. Instrument nach Anspruch 1 oder 2, wobei sich die Mutter (32) über einen Spalt zwischen den einander zugewandten Enden des Rohranschlusses (16) und des Nippels (12) erstreckt.

4. Instrument nach einem oder mehreren der Ansprüche 1 bis 3, wobei zum Verbinden des zweiten Rohranschlusses (18) mit einem zweiten, an eine Rohrleitung anschließbaren Nippel (13) eine zweite Kupplungsvorrichtung vorgesehen ist, welche umfaßt:
ein zweites, auf dem zweiten Rohranschluß (18) drehbar angebrachtes Ringelement (54), welches ein Außengewinde (56) besitzt;
eine zweite, auf dem zweiten Nippel (13) drehbar angebrachte Mutter, die ein Innengewinde (52) sowie eine Innenschulter aufweist, wobei das Innengewinde (52) zum Zusammenwirken mit dem Außengewinde (56) des zweiten Ringelements (54) dem Instrument (10) und die Innenschulter dem Innengewinde (52) der zweiten Mutter (48) zugewandt ist,
wobei der zweite Rohranschluß (18) und der zweite Nippel (13) mit Außenschultern versehen sind, welche dem vom Instrument (10) abgewandten Ende des zweiten Ringelements (54) bzw. der Innenschulter der zweiten Mutter (48) zugekehrt sind.

5. Instrument nach Anspruch 4, wobei zwischen den einander zugewandten Enden des zweiten Rohranschlusses (18) und des zweiten Nippels (13) eine Dichtung (46) vorgesehen ist.

6. Instrument nach einem der vorstehenden Ansprüche, wobei das Ringelement (24;54) von zwei Hälften einer ringförmigen Muffe gebildet wird.

7. Instrument nach Anspruch 6, wobei die beiden Muffenhälften lösbar miteinander verbunden sind.

8. Instrument nach einem oder mehreren der vorstehenden Ansprüche, dadurch gekennzeichnet, daß das Instrument ein Wassermesser ist.

FIG. 1

FIG. 2